# EUROPEAN PATENT SPECIFICATION

(11) **EP 2 113 714 B1**
(45) Date of publication and mention of the grant of the patent: **12.09.2012**
(21) Application number: 08103784.8
(22) Date of filing: 30.04.2008
(51) Int. Cl.: F21S 10/00, F21V 9/00, F21V 17/16

(54) **Color wheel**
Farbrad
Roue de couleur

(43) Date of publication of application: 04.11.2009
(73) Proprietor: Martin Professional A/S, 8200 Aarhus N (DK)
(72) Inventor: Kjær, Lars Barslund, 8732, Hovedgård (DK)
(74) Representative: Nielsen, Leif

(56) References cited:
- EP-A- 1 293 722
- WO-A-2004/031825
- WO-A-2004/046607
- US-A- 5 060 126
- US-A1- 2003 076 681

## Description

### Field of the Invention

The present invention relates to a light fixture comprising at least one light source for generating a beam of light, which light fixture comprises at least one color wheel, which color wheel comprises a plurality of color filters mounted on the periphery of the wheel, which filters are positioned mostly contiguous to each other, which color wheels is rotated to place the peripheral color filters in position to intercept the light beam, which color filters are replaceable, which color filters are fixed to the color wheel by a central spring, which central spring comprises a number of radial protruding tongues for fixation of the color filters.

### Background of the Invention

US 4 800 474 concerns a lighting fixture, which light fixture includes a source for producing a beam of light and pair of color wheels. Each of the color wheels has a plurality of dichroic filters mounted on the periphery of the wheel with the filters positioned contiguous to each other. The light beam is directed to a focal point. Each of the color wheels can be rotated to place the peripheral dichroic filters in position to intercept the beam. One of the color wheels is equipped with long wave pass dichroic filters while the other color wheel is equipped with short wave pass dichroic filters. By aligning various combinations of these filters, a large number of different colors with different saturations can be produced. The cut-off wavelengths for the dichoric filters are selected to be different at the long and short wavelengths of the filter set, such that there is produced a perceived uniform graduation of colors across the spectrum. Each of the dichroic filters mounted on the color wheels is in a shape of a trapezoid and is mounted adjacent other filters, such that there is no blanking of light or leakage of light in the process of changing from one filter to the next.

US 5 060 126 concerns color wheel for lighting fixture, which color wheel includes a polygonal metal plate, which has slotted metal bars seated on the side edge of the polygonal plate with rectangular glass plates, e.g. dichroic filters adhesively held in the slots of the metal bars spaced. The glass plates are not in direct contact with the metal bars and are spaced close to each other, but not in contact, in a peripheral array.

US 6 011 662 describes a color wheel for lighting fixtures comprising a hub wherein removable, user-selected dichroic filters are engaged by a spring element. The filters are removable held by two pegs extending upward and one nub extending downward. The filters can be lifted for removal.

WO 2004/031825 also describes such a color wheel.

### Object of the Invention

It is an object of the pending patent application to describe a color wheel where the color filters are removable and where the color filters placed at the color wheel are secured in a correct position. A further object of the invention is to avoid use of glue for fastening the color filters.

### Description of the Invention

This can be achieved by a color wheel as described in the preamble to the claim one. The color wheel comprises a number of radial protrusions formed between the color filters, which color wheel also comprises an outer circular protrusion at the outside the color filters.

It can hereby be achieved that color filters are fixed in their position because these are placed in a cavity that surrounds the color filter at both sides as well as at the outside. Inwards the color filter is fixed by the protruding tongue that is pressing down the color filter and keeping it in place. This will lead to a nearly perfect fixation of a color filter, which can be exchanged if necessary. The correct placement of a color filter achieves the total performance quality of a light show, as these color filters will be kept in the correct position, independent on movements of for example a moving head or the rotation of the color wheel. If the color has to be changed, it is very easy to exchange one or more of the color filters and then achieve other colors if this is preferred in the next performance of a light show. Placing the color filters in the cavity also leads to a protection of the color filters during service of a light fixture. During service it is possible to exchange the color wheel with another color wheel comprising another combination of color filters. During that handling, it is very important that the color filters are protected against dirty fingers and/or mechanical impact from tools.

In a preferred embodiment for the invention the color wheel comprises a protection material placed below the color filters and below the radial protruding tongues. Hereby it is achieved that the material below the protruding tongue is protected against the edge of the color filter. A color filter is probably formed of a quartz glass, which is extremely hard in relation to the metal surface of the color wheel. In order not to damage the color wheel with scratches or damage the color filter, it is very important that some kind of protective material is placed under the color filter, as during placement of the color filter, the edge of the color filter will be in touch with that surface.

The color wheel can be formed of a moulded component to which moulded component the radial protruding tongues and the protection material are fixed. One possible way of forming a color wheel is by moulding. In this way, a high number of color wheels could be produced relatively cheap when the tooling is fabricated.

The color wheel can mostly be formed of a material comprising magnesium. One possible way is to produce the color wheel in magnesium or a magnesium alloy. Other material would also be possible; however, one of the benefits with using magnesium is a very low weight.
The color wheel can be hold in place at an axel by magnetic attraction. The color wheel can be attract to an axel in different way; one way of keeping the color wheel in a correct position, is by placing a magnet maybe in the centre around the axel at the color wheel or placing the magnet at the fixture and letting the magnet attract a central ring placed around the axel. In this way it will be very easy to replace a color wheel.

Around a central opening in the color wheel a tooth wheel is formed so that an external tooth wheel can interact with the tooth wheel at the color wheel and in this way rotate the color wheel.

At the outside of the color wheel a small opening can be formed, which can be detected by an optical or mechanical detector in order to tell a computer system where the correct position is for the color wheel. This is important if a color wheel has been exchanged. During operation, by computer means a light fixture will probably be able to calculate the actual position of the color wheel in different situations as long as there is no power down.

### Description of the Drawing

Figure 1 shows a color wheel.
Figure 2 shows the same color wheel where the color filters are removed.
Figure 3 shows a sectional view of a color wheel.
Figure 4 shows an enlarged sectional view of a color wheel.

### Detailed Description of the Invention

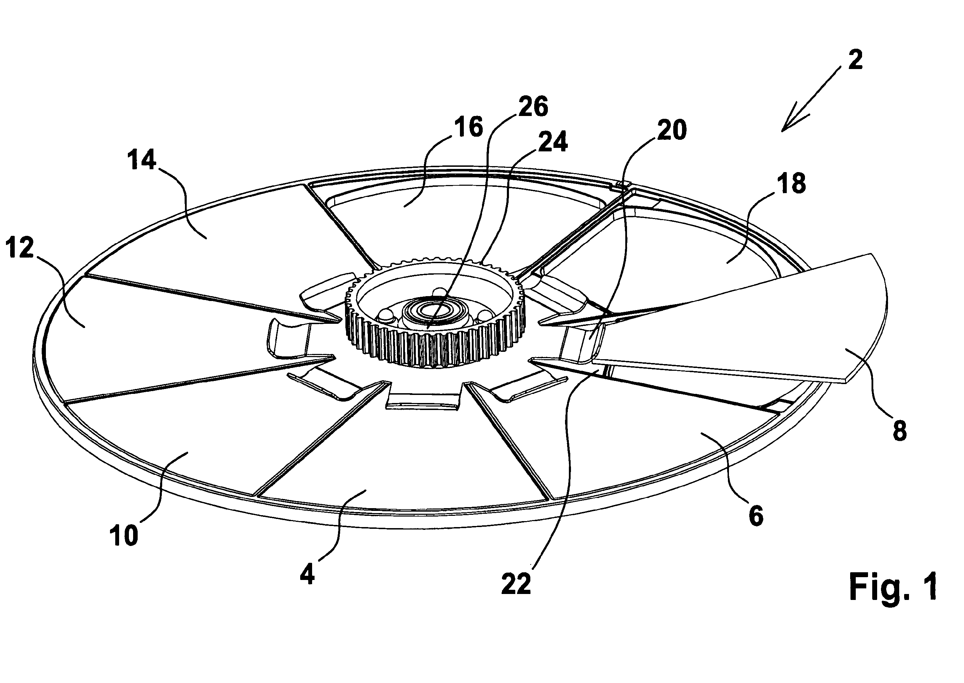

Figure 1 shows a color wheel 2 for use in a light fixture. The color wheel 2 comprises a number of color filters 4, 6, 8, 10, 12, 14 and 18. Between the color filters 14 and 18 an empty space 16 with an opening is shown. The color wheel 2 comprises radial protruding springs 20 for fastening the color filters. Below the radial protruding springs a protecting plate 22 is shown. Around the centre of the color wheel a tooth ring 24 for rotating the color wheel is placed. Inside the tooth ring 24 a bearing 26 is shown.

As shown in figure 1 the color filter 8 is not in place however, it is probably in its way to be placed correct below the radial protruding spring 20. It can be seen in figure 1 that the front edge of the color filter 8 is touching the protecting plate 22 where the protecting plate 22, during placement or removal of the color filter 8, will protect the color wheel as such against scratches.

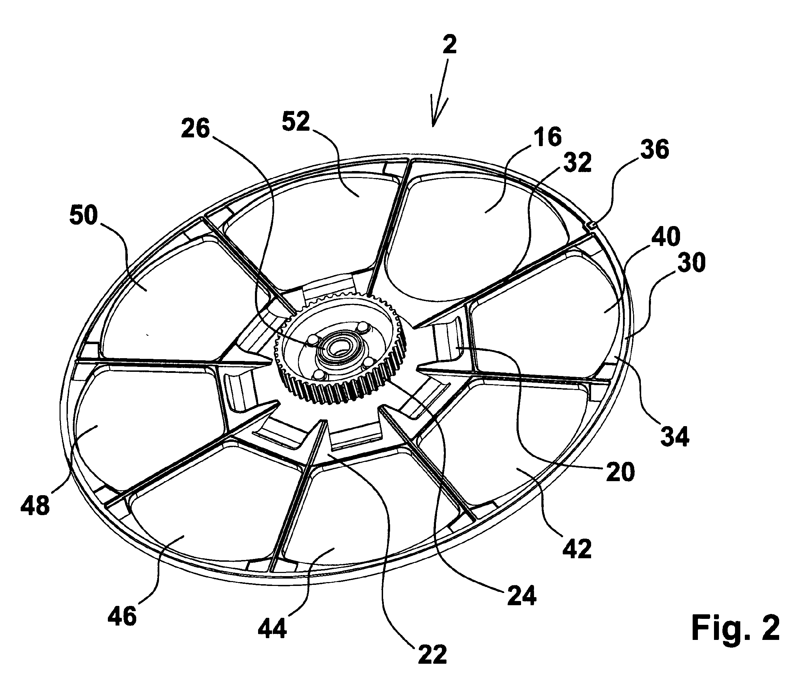

Figure 2 shows the same color wheel 2 but in a situation where all color filters are removed. An opening 16 is shown, which is the same opening as shown in figure 1, which is the free pass for light during operation. The radial protruding spring 20 is placed over the protecting plate 22. The tooth ring is indicated as well as the bearing 26 is indicated. The color wheel 2 comprises an axial outer protrusion 30 surrounding the outer edge of the color filters. Furthermore, radial protrusions 32 placed between the color filters are indicated. The color wheel 2 also comprises support areas 34 for support of the color filters. In the circular protrusion 30 a recess 36 is formed, which is used for position indication of a color wheel 2 when it is in operation. The color wheel 2 shown in figure 2 has no color filters in place; therefore, there are openings 40-52 through the color wheel. By these openings 40-52, seven positions are free for color filters and one opening 16 are free.

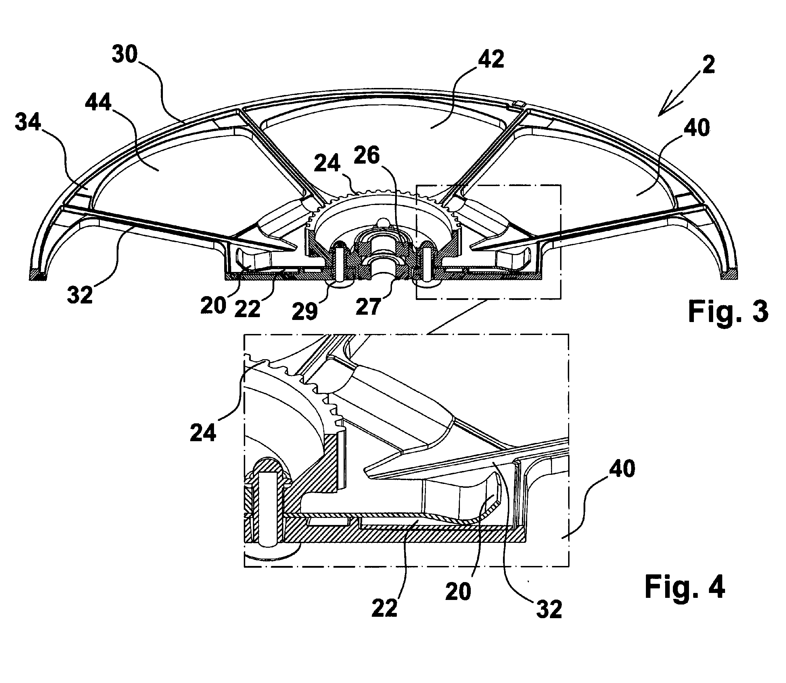

Figure 3 shows a sectional view of a color wheel 2 where figure 3 shows a cut through the radial protruding spring 20 and the support plate 22 placed there below. Further the tooth ring 24 and the bearings 26 and 27 are indicated. Screws 29, which are interconnecting the tooth ring 24 and the radial protruding spring 20, are also indicated with the color wheel. Furthermore, the axial protruding 30 and the radial protruding 32 are indicated. Furthermore, the support area 34 is indicated. Furthermore, the openings 40, 42 and 44 are shown.

Figure 4 shows an enlarged sectional view of a color wheel according to this invention. The protruding spring 20 is indicated in the front as well as the protecting plate 22 placed there below. Furthermore, the tooth ring 24 is shown on figure 4. The radial protrusion 32 as well as the opening 40 is indicated.

A color wheel as described in the figures 1-4 can be formed of different materials by pressure moulding or by tooling and many different materials can be used. Because of the high temperature that occurs when using the color filters, heat resistance materials are most effective for a color wheel. Metal or metal alloys are the best materiel for the color wheel when high temperature performance is necessary. In order to reduce the total weight of a light fixture, which has to be placed over a stage, light material is preferred. Therefore, one possible material for this color wheel will be magnesium. If pure magnesium is used, then there are a number of magnesium alloys, which can be used. Especially, if magnesium or magnesium alloys are used, it is necessary to have the protection plate 22 placed where the edge of the color filter is touching the surface. A direct contact between magnesium and the edge of a color filter might damage the color wheel. Therefore, a plate of a harder material such as stainless steel is preferred.

## Claims

1. A light fixture comprising at least one light source for generating a beam of light, which light fixture comprises at least one color wheel (2), which color wheel (2) comprises a plurality of color filters (4,6,8,10,12,14 and 18) mounted on the periphery of the color wheel (2), which color filters (4,6,8,10,12,14 and 18) are positioned mostly contiguous to each other, which color wheels (2) is rotated to place the peripheral color filters (4,6,8,10,12,14 and 18) in position to intercept the light bearn, which color filters (4,6,8,10,12,14 and 18) are replaceable, which color filters (4,6,8,10,12,14 and 18) are fixed to the color wheel (2) by a central protruding spring , which central protruding spring comprises a number of radial protruding tongues (20) for fixation of the color filters (4,6,8,10,12,14 and 18), **characterized in that** the color wheel (2) comprises a number of radial protrusions (32) formed between the color filters (4,6,8,10,12,14 and 18), which color wheel (2) comprises a outer circular protrusion (30) at the outside the color filters (4,6,8,10,12,14 and 18), said radial protrusions and said outer circular protrusions form an open framework wherein each of said color filters is positioned over a respective opening of said framework.

2. A light fixture according to claim 1, **characterized in that** the color wheel (2) comprises a protection material (22) placed below the color filters (4,6,8,10,12,14 and 18) and below the radial protruding tongues (20).

3. A light fixture according to claim 1 or 2 **characterized in that** the color wheel (2) is formed of a moulded component to which moulded component the radial protruding tongues (20) and the protection material (22) are fixed.

4. A light fixture according to one of the claims 1-3, **characterized in that** the color wheel (2) is mostly formed of a material comprising magnesium.

5. A light fixture according to one of the claims 1-4, **characterized in that** the color wheel (2) is hold in place at an axel by magnetic attraction.

## Patentansprüche

1. Lampe, die wenigstens eine Lichtquelle zum Erzeugen eines Lichtstrahls umfasst, wobei die Lampe wenigstens ein Farbrad (2) aufweist, wobei das Farbrad (2) mehrere Farbfilter (4, 6, 8, 10, 12, 14 und 18) umfasst, die am Umfang des Farbrades (2) montiert sind, wobei die Farbfilter (4, 6, 8, 10, 12, 14 und 18) hauptsächlich einander benachbart positioniert sind, wobei Farbräder (2) gedreht werden, um die Umfangsfarbfilter (4, 6, 8, 10, 12, 14 und 18) an einer Position anzuordnen, um den Lichtstrahl abzufangen, wobei die Farbfilter (4, 6, 8, 10, 12, 14 und 18) austauschbar sind, wobei die Farbfilter (4, 6, 8, 10, 12, 14 und 18) an dem Farbrad (2) durch eine mittige vorstehende Feder befestigt sind, wobei die mittige vorstehende Feder zahlreiche radiale vorstehende Zungen (20) aufweist, um die Farbfilter (4, 6, 8, 10, 12, 14 und 18) zu befestigen, **dadurch gekennzeichnet, dass** das Farbrad (2) zahlreiche radiale Vorsprünge (32) umfasst, die zwischen den Farbfiltern (4, 6, 8, 10, 12, 14 und 18) ausgebildet sind, wobei das Farbrad (2) einen äußeren kreisförmigen Vorsprung (30) an der Außenseite der Farbfilter (4, 6, 8, 10, 12, 14 und 18) aufweist, wobei die radialen Vorsprünge und der äußere kreisförmige Vorsprung ein offenes Gestell bilden, wobei jeder der Farbfilter über einer entsprechenden Öffnung des Gestells positioniert ist.

2. Lampe nach Anspruch 1, **dadurch gekennzeichnet, dass** das Farbrad (2) ein Schutzmaterial (22) aufweist, das unter den Farbfiltern (4, 6, 8, 10, 12, 14 und 18) und unter den radialen vorstehenden Zungen (20) angeordnet ist.

3. Lampe nach Anspruch 1 oder 2, **dadurch gekennzeichnet, dass** das Farbrad (2) aus einer gegossenen Komponente gebildet ist, wobei die radialen vorstehenden Zungen (20) und das Schutzmaterial an der gegossenen Komponente befestigt sind.

4. Lampe nach einem der Ansprüche 1-3, **dadurch gekenntzeichnet,** dass das Farbrad (2) hauptsächlich aus einem Material, das Magnesium enthält, gebildet ist.

5. Lampe nach einem der Ansprüche 1-4, **dadurch gekennzeichnet, dass** das Farbrad (2) an einem Bolzen durch magnetische Anziehung festgehalten wird.

## Revendications

1. Appareil d'éclairage comprenant au moins une source de lumière pour générer un faisceau de lumière, lequel appareil d'éclairage comprend au moins une roue de couleur (2), laquelle roue de couleur (2) comprend une pluralité de filtres colorés (4, 6, 8, 10, 12, 14 et 18) montés sur la périphérie de la roue de couleur (2), lesquels filtres colorés (4, 6, 8, 10, 12, 14 et 18) sont positionnés généralement de façon contiguë les uns aux autres, laquelle roue de couleur (2) est tournée pour placer les filtres colorés périphériques (4, 6, 8, 10, 12, 14 et 18) en position pour intercepter le faisceau de lumière, lesquels filtres colorés (4, 6, 8, 10, 12, 14 et 18) sont remplaçables, lesquels filtres colorés (4, 6, 8, 10, 12, 14 et 18) sont fixés à la roue de couleur (2) par un ressort saillant central, lequel ressort saillant central comprend un certain nombre de languettes saillantes radiales (20) pour fixation des filtres colorés (4, 6, 8, 10, 12, 14 et 18), **caractérisé en ce que** la roue de couleur (2) comprend un certain nombre de saillies radiales (32) formées entre les filtres colorés (4, 6, 8, 10, 12, 14 et 18), laquelle roue de couleur (2) comprend une saillie circulaire externe (30) à l'extérieur des filtres colorés (4, 6, 8, 10, 12, 14 et 18), lesdites saillies radiales et lesdites saillies circulaires externes forment une ossature ouverte dans laquelle chacun desdits filtres colorés est positionné sur une ouverture respective de ladite ossature.

2. Appareil d'éclairage selon la revendication 1, **caractérisé en ce que** la roue de couleur (2) comprend un matériau de protection (22) placé en dessous des filtres colorés (4, 6, 8, 10, 12, 14 et 18) et en dessous des languettes saillantes radiales (20).

3. Appareil d'éclairage selon la revendication 1 ou 2, **caractérisé en ce que** la roue de couleur (2) est formée d'un composant moulé, auquel composant moulé sont fixés les languettes saillantes radiales (20) et le matériau de protection (22).

4. Appareil d'éclairage selon l'une des revendications 1 à 3, **caractérisé en ce que** la roue de couleur (2) est constituée principalement d'un matériau comprenant du magnésium.

5. Appareil d'éclairage selon l'une des revendications 1 à 4, **caractérisé en ce que** la roue de couleur (2) est maintenue en place sur un axe par l'attraction magnétique.
